# FASCICULE DE BREVET EUROPEEN

(11) **EP 2 921 771 B1**
(45) Date de publication et mention de la délivrance du brevet: **28.07.2021**
(21) Numéro de dépôt: 15159807.5
(22) Date de dépôt: 19.03.2015
(51) Int. Cl.: F21S 41/148, F21S 41/33, F21S 43/14, F21S 43/19, F21S 43/236, F21S 43/237, F21S 43/241, F21S 43/245, F21S 43/247, F21S 43/249, F21S 43/27, F21S 43/40, F21S 43/31

(54) **MODULE LUMINEUX POUR VÉHICULE AUTOMOBILE**
LEUCHTMODUL FÜR KRAFTFAHRZEUG
LIGHT MODULE FOR MOTOR VEHICLE

(30) Priorité: 20.03.2014 FR 1452340
(43) Date de publication de la demande: 23.09.2015
(73) Titulaire: VALEO ILUMINACION, 23600 Martos (ES)
(72) Inventeur: Cabanne, Damien, 23600 Martos (ES); Rodríguez Fuentes, Alberto, 23004 JAÉN (ES); Aguilar del Moral, José Antonio, 23009 JAÉN (ES); Castillo Jiménez, José, 23600 MARTOS (ES)

(56) Documents cités:
- WO-A2-2012/040280
- DE-A1- 10 200 359
- DE-A1-102010 061 210
- DE-U1- 20 211 305
- FR-A1- 2 813 654
- FR-A1- 2 934 353
- US-A1- 2013 201 709
- None

## Description

La présente invention a trait au domaine de l'éclairage et/ou de la signalisation d'un véhicule automobile et elle concerne plus particulièrement la conception de modules lumineux aptes à émettre des feux diurnes.

Ces dernières années, il a été demandé aux constructeurs automobiles d'équiper la face avant de leurs véhicules de feux diurnes (dispositif connu également sous l'acronyme anglais DRL pour " Daytime Running Light "). Ces feux diurnes sont constamment allumés dès lors que les feux de route ou les feux de croisement ne sont pas allumés. Ces feux diurnes sont réglementés quant à la couleur qu'ils doivent émettre, à savoir une couleur blanche.

Comme tout type d'éclairage et/ou de signalisation de véhicule automobile, la fonction de feux diurnes doit répondre à des normes réglementaires, notamment dans ce cas à des normes relatives d'une part à la photométrie et d'autre part à la surface minimale d'éclairage. En d'autres termes, il convient d'une part que l'intensité et la direction des rayons lumineux émis par les feux diurnes soient correctement calibrées et il convient d'autre part que la surface utilisée pour réaliser cette fonction de feux diurnes soit supérieure à un seuil minimal réglementaire.

On comprend que cette question de surface minimale d'éclairage peut être problématique alors que les designs des projecteurs de véhicule automobile comportant de tels modules lumineux sont particulièrement soignés.

Le document FR2813654 divulgue un dispositif avec un collecteur sous lequel passe un guide de lumière, duquel des rayons sortent par une première face et vers l'avant et des rayons sortent par une deuxième face et vers l'arrière en direction du collecteur.

La présente invention s'inscrit dans ce contexte, et elle propose un module lumineux comportant un moyen support d'au moins un collecteur de rayons lumineux, émis par une source lumineuse primaire, au voisinage duquel est disposé un guide de lumière apte à guider les rayons émis par une source lumineuse secondaire depuis une face d'entrée vers au moins deux faces de sortie distinctes et adjacentes. On prévoit ainsi une face de sortie principale, à travers laquelle les rayons passent selon une première direction, et au moins une face de sortie additionnelle adjacente à la face de sortie principale, et donc non parallèle à celle-ci, de sorte qu'elle est orientée pour que les rayons lumineux sortant du guide à travers cette face additionnelle soient dirigés vers le collecteur, selon une deuxième direction distincte de la première direction.

L'objet de l'invention est selon la revendication 1.

Ainsi, on sait augmenter la surface d'éclairage en utilisant des collecteurs, qui peuvent par ailleurs être utilisés pour la réflexion de rayons lumineux émis par une source lumineuse primaire qui leur est propre, puisque le guide de lumière est dégagé du champ de réflexion des collecteurs, On comprend que c'est par le fait que la face de sortie additionnelle soit adjacente à la face de sortie principale, et donc non parallèle à celle-ci, que le guide peut avoir sa fonction optique propre et utiliser en outre les collecteurs voisins, sans gêner la fonction optique réalisée par ailleurs par les collecteurs.

Selon différentes caractéristiques optionnelles de l'invention,
- la au moins une face de sortie additionnelle est sensiblement perpendiculaire à ladite face de sortie principale ;
- le guide de lumière est réalisé dans un matériau apte à être traversé par la lumière, tel qu'un matériau transparent, notamment du polyméthacrylate de méthyle ou du polycarbonate ;
- la face de sortie principale et/ou les faces de sortie additionnelles comprennent des tores prenant la forme de coussinets, des éléments prismatiques, de stries, ou du grainage ;
- la face de sortie principale est munie de tores prenant la forme de coussinets, tandis que les faces de sortie additionnelles sont munies d'éléments prismatiques ;
- le guide de lumière et la source lumineuse secondaire sont respectivement fixés sur le moyen support de sorte que la source lumineuse secondaire est disposée en regard de la face d'entrée dudit guide de lumière ;
- le guide de lumière est fixé sur le moyen support par l'intermédiaire d'une platine de fixation ;
- la platine de fixation comporte une zone d'ancrage porteuse des moyens de fixation de la platine sur le moyen support, ainsi qu'une zone de fixation du guide de lumière ;
- un élément porteur intermédiaire est disposé entre la platine et le guide de lumière.

Selon l'invention, le moyen support porte deux collecteurs aptes à dévier sensiblement parallèlement à l'axe optique la lumière émise par une source lumineuse primaire respectivement associée à chacun des collecteurs. Dans ce cas, on prévoit un système optique additionnel disposé entre les collecteurs et qui comporte une source lumineuse secondaire apte à émettre des rayons dans le guide de lumière, le guide de lumière comportant trois faces de sortie, parmi lesquelles une face de sortie principale sensiblement perpendiculaire à l'axe optique et deux faces de sortie additionnelles opposées et respectivement orientées vers chacun des collecteurs.

Selon d'autres modes de réalisation optionnels:
- le guide de lumière s'étend sensiblement sur toute la hauteur du collecteur et prend une forme tubulaire, la source lumineuse étant disposée sous le collecteur en regard de la face d'entrée du guide de lumière formée à une extrémité axiale dudit guide et le système optique additionnel comporte en outre une platine de fixation par l'intermédiaire de laquelle le guide de lumière est fixé sur le moyen support. La platine de fixation peut comporter alors une zone d'ancrage porteuse des moyens de fixation de la platine sur le moyen support, ainsi qu'une zone de fixation du guide de lumière, et la zone de fixation peut être agencée pour permettre l'insertion du guide de lumière latéralement dans la platine, en présentant des moyens d'encliquetage coopérants avec des moyens d'encliquetage complémentaires portés par le guide de lumière pour le maintien en position de ce dernier dans la platine de fixation.
- le guide de lumière s'étend sensiblement à mi-hauteur du collecteur et comporte une tête porteuse des faces de sortie et un corps tubulaire prolongeant ladite tête sensiblement selon l'axe optique, la source lumineuse étant disposée en regard de la face d'entrée disposée à l'extrémité du corps opposée à ladite tête et le système optique additionnel comporte en outre une platine de fixation et un carénage intermédiaire par l'intermédiaire de laquelle le guide de lumière est fixé sur le moyen support, le carénage intermédiaire étant adapté à porter le guide de lumière et à être fixé sur ladite platine, elle-même fixée sur le moyen support.

L'invention concerne également un véhicule automobile dans lequel un module lumineux tel qu'il a été décrit précédemment est mis en place pour l'éclairage et/ou la signalisation du véhicule automobile.

D'autres caractéristiques et avantages de l'invention apparaîtront à la lecture de la description détaillée d'un mode de réalisation qui va suivre et pour la compréhension de laquelle on se reportera aux figures annexées parmi lesquelles :
- la figure 1 est une représentation en perspective, de trois quart avant, d'un module lumineux selon un premier mode de réalisation ;
- la figure 2 est une représentation en perspective similaire à celle de la figure 1, dans laquelle des composants du module lumineux, à savoir deux collecteurs portés par un moyen support, une platine de fixation, un guide de lumière et une plaque de circuits imprimés porteuse d'une diode électroluminescente, sont représentés en éclaté ;
- la figure 3 est une vue partielle en perspective, de trois quart arrière, du guide de lumière illustré sur la figure 2 ; et
- les figures 4 et 5 sont des vues similaires aux vues des figures 1 et 2 d'un module lumineux selon un deuxième mode de réalisation, particulier notamment dans la forme du guide de lumière et de la platine de fixation.

Dans ce qui suit, on désignera par direction longitudinale L la direction dans le sens de circulation du véhicule automobile, et par direction transversale T une direction horizontale et perpendiculaire à cette direction longitudinale. La direction verticale V désignera la direction perpendiculaire aux deux précédentes, qui définissent par ailleurs un plan horizontal. Le trièdre L,V,T est placé sur les figures pour faciliter la lecture. Mais on comprendra que le module lumineux peut être agencé selon une autre orientation sans sortir du contexte de l'invention.

Un module lumineux 2 comporte un moyen support 4 sur lequel sont rapportés au moins une source lumineuse primaire, ici non représentée, et au moins un collecteur elliptique 6 adapté à réfléchir les rayons émis par la source lumineuse primaire qui lui est associée en direction d'un élément optique porté par le support.

L'élément optique est disposé au deuxième foyer du collecteur elliptique tandis que la source lumineuse primaire doit être disposée sensiblement au premier foyer du collecteur, au droit du dégagement formé dans le support. Cet agencement permet à la majorité des rayons émis par la source lumineuse primaire et passant par le second foyer du collecteur d'être réfléchis par l'élément optique selon la direction d'éclairage correspondant à son axe optique.

Ces sources lumineuses primaires émettent directement dans le collecteur et assurent des fonctions d'éclairage de feux de route ou de croisement lorsqu'elles sont allumées, automatiquement ou par commande manuelle du conducteur.

Selon l'invention, le module comporte en outre au moins un système optique additionnel 8, disposé au voisinage du ou des collecteurs, et ce système optique assure la fonction de feux diurnes, allumés lorsque les fonctions d'éclairage de feux de route et de croisement sont éteintes.

Le système optique additionnel comporte une source lumineuse secondaire 10, apte à émettre de la lumière dans un guide de lumière porté par une platine rendue solidaire du moyen du support du module lumineux. Ce système optique additionnel est particulièrement apte à guider la lumière émise par la source lumineuse secondaire vers au moins deux faces de sortie distinctes.

On va maintenant décrire des modes de réalisation de l'invention dans lesquels le module comporte deux collecteurs rapportés sur le moyen support.

Chaque collecteur comporte une surface réfléchissante sensiblement elliptique, qui peut être réalisée sous la forme d'un secteur angulaire de pièce sensiblement de révolution. On peut cependant noter que la surface peut ne pas être parfaitement elliptique et avoir plusieurs profils spécifiques prévus pour optimiser la répartition lumineuse dans le faisceau d'éclairage produit par le module, tel que cela est illustré sur les figures. On a alors deux sources lumineuses primaires, chacune étant portée par le moyen support pour être associée à l'un des collecteurs comme décrit précédemment, au voisinage du premier foyer du collecteur correspondant. Les deux collecteurs sont ici agencés pour que leur deuxième foyer respectif soient sensiblement confondus en un point où est placé le foyer de l'élément optique.

Les deux collecteurs sont rapportés sur le moyen support 4 de manière à être disposés côte à côte dans la direction transversale, en ménageant une zone intermédiaire 12 qui s'étend entre les deux collecteurs 6.

La zone intermédiaire comporte en partie supérieure une surface d'appui 14 sensiblement affleurante avec les collecteurs et en partie inférieure un logement 16 creusé longitudinalement.

Le moyen support présente sur sa paroi supérieure une rainure 18 qui prolonge longitudinalement la surface d'appui de la zone intermédiaire.

La zone intermédiaire présente des dimensions appropriées pour recevoir le système optique additionnel 8, comportant comme décrit précédemment un guide de lumière 20 et une platine de fixation 22.

La platine de fixation comporte en partie arrière, définie ainsi à titre arbitraire par rapport à l'orientation du trièdre choisie sur les figures, une zone d'ancrage 24 dans le module, apte notamment à pénétrer dans le logement formé dans la zone intermédiaire entre les collecteurs, et en partie avant une zone de fixation 26 du guide de lumière 20, pour maintenir celui-ci en position aussi bien par rapport aux collecteurs que par rapport à la source lumineuse secondaire, qui est amené en regard de la platine de fixation.

La zone d'ancrage 24 présente ici une partie supérieure 28, dont la face arrière, courbe, est apte à suivre la forme courbe de la zone intermédiaire, et une partie inférieure 30 sensiblement droite.

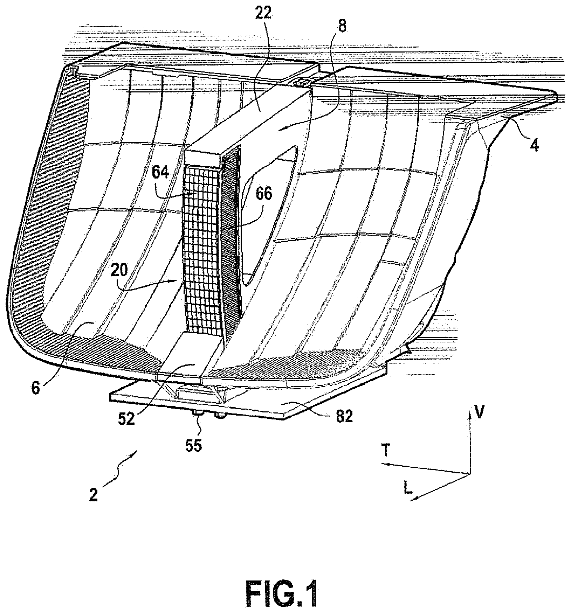

La partie supérieure est évidée en son centre pour des questions de poids et de design, cette partie de la platine étant visible lorsque la platine est rapportée contre la zone intermédiaire entre les collecteurs (tel que cela est visible sur la figure 1).

La zone d'ancrage porte deux éléments de fixation par encliquetage dans le moyen support. Un élément mâle 32, présentant la forme d'une fiche, est formé en saillie de la partie inférieure 30, tourné à l'opposé de la platine de fixation et du guide de lumière associé, et cet élément mâle de fixation est adapté à être enfiché dans une prise 34 aménagée dans le logement 16 formé dans la partie inférieure de la zone intermédiaire 12. Un élément femelle, présentant la forme d'un œillet 36, est adapté à venir en prise autour d'un pion vertical 38 aménagé à cet effet dans la rainure centrale 18 du moyen support. On observe que l'élément mâle de fixation en partie basse est enfiché selon une direction longitudinale perpendiculaire à la direction selon laquelle l'œillet est emmanché autour du pion. Ainsi, la platine de fixation est bloquée dans les trois directions de l'espace et elle offre un support stable pour le guide de lumière.

Comme cela est visible sur les figures, la zone de fixation du guide de lumière est disposée longitudinalement en avant de la zone d'ancrage. Elle présente une face de support 40 formée par la face avant de la zone d'ancrage, prolongée à son extrémité verticale supérieure par une patte longitudinale 42 qui assure un arrêt en position vertical du guide et qui présente à son extrémité libre un bord tombé 44, qui assure lui un maintien longitudinal du guide. Le bord tombé pourra comporter sur sa face interne, tournée vers l'intérieur de la zone de fixation, un ergot, ici non visible, qui réduit ponctuellement la distance entre la face de support et le bord tombé.

La face de support présente la courbure adéquate pour que le guide de lumière soit en appui contre cette face de support sur toute sa hauteur.

La face de support est prolongée à son extrémité verticale inférieure par une cuvette de réception sensiblement en forme de U, dont une première aile 48 est formée par l'extrémité inférieure de la face de support, dont la paroi de fond 50 prolonge perpendiculairement la première aile en saillie de la face de support, et dont la deuxième aile 52 est formée par une paroi de retour qui prolonge sensiblement perpendiculairement la paroi de fond. Une lumière 54 est aménagée dans la paroi de fond pour laisser passage à la diffusion de lumière par la source lumineuse, le fond étant disposé entre la source lumineuse et le guide de lumière.

La paroi de fond comporte sur sa face externe, tournée à l'opposé de la cuvette de réception, des plots d'indexage 55 aptes à coopérer avec des trous d'indexage complémentaires formés sur la source lumineuse.

La cuvette comporte en outre des premiers éléments coopérants avec des seconds éléments portés par le guide de lumière pour assurer le maintien en position transversal de ce guide dans la platine de fixation. Ces premiers éléments coopérant comportent notamment un rail de guidage transversal 58 et une butée 59 disposée en bout de cette rampe, venus de matière avec la première aile de la cuvette, ainsi qu'un tenon s'étendant longitudinalement à l'intérieur de la cuvette et venu de matière avec la deuxième aile (et non visible sur les figures).

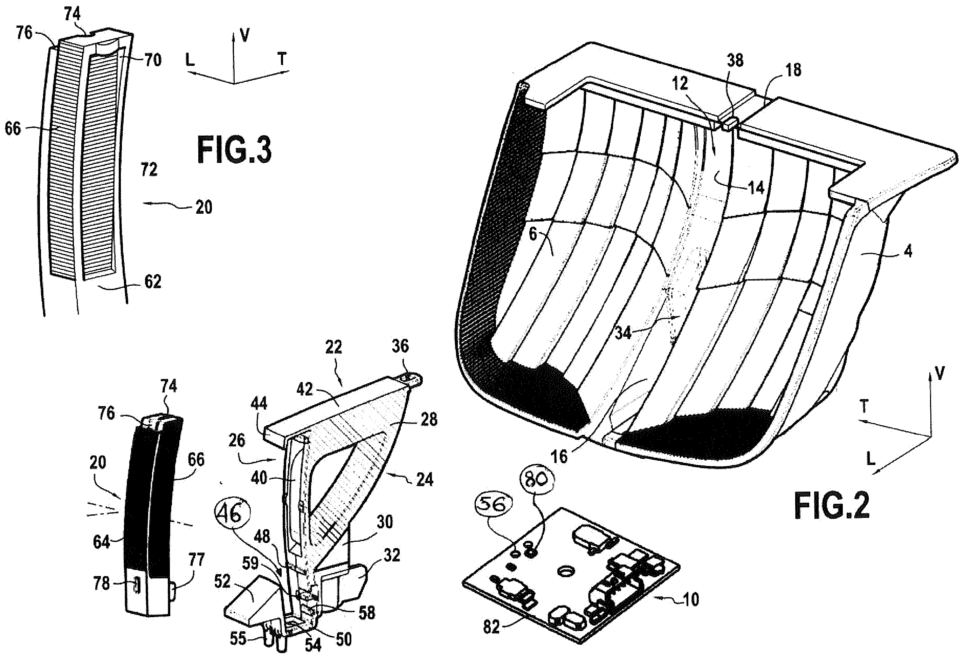

La paroi de retour formée par la deuxième aile 52 de la cuvette assure le maintien longitudinal de la partie basse du guide de lumière 20. Tel que visible sur les figures 1 et 2, on pourra donner à la paroi de retour une forme adaptée à rappeler la courbure du collecteur s'étendant à côté du guide de lumière.

Le guide de lumière 20 présente une forme tubulaire de section carrée, avec quatre côtés et deux bases opposées qui s'étendent sensiblement horizontalement lorsque le guide est en place dans le logement, et que l'on va nommer base inférieure et base supérieure en fonction de leur positionnement dans le logement dans l'orientation choisie à titre arbitraire.

Le guide de lumière est réalisé en un matériau transparent tel que du polyméthacrylate de méthyle (également défini sous l'abréviation P.M.M.A) apte à se laisser traverser par la lumière. Il comporte une face d'entrée disposée en regard de la source lumineuse et une pluralité de faces de sortie par lesquelles les rayons lumineux, guidés à l'intérieur du guide 20 par réflexion internes successives sont réfractés.

La face d'entrée est formée par la base inférieure, en regard de laquelle est placée la source lumineuse 10. La face d'entrée peut présenter une forme de collimateur pour faciliter l'acheminement des rayons lumineux à l'intérieur du guide de lumière.

Parmi les quatre côtés, on distingue un côté qui sert de face de contact 62 contre le support de guide et trois côtés qui forment chacun une face de sortie des rayons lumineux. Une face de sortie principale 64 est opposée à la face de contact et deux faces de sortie additionnelles 66 (une seule étant visible, que ce soit sur la figure 1, 2 ou 3) reliant respectivement une extrémité transversale de la face de sortie principale 64 et l'extrémité transversale correspondante de la face de contact 62 de sorte qu'elles sont chacune adjacentes à la face de sortie principale 64. Il est notable donc que ces faces de sortie additionnelles s'étendent dans un plan non parallèle au plan dans lequel s'étend la face de sortie principale. On constate qu'ainsi la face de sortie principale est orientée pour émettre des rayons sensiblement parallèlement à l'axe optique du véhicule, et que les faces de sortie additionnelles sont orientées pour que les rayons lumineux amenés à sortir du guide à travers elles soient dirigés vers les collecteurs.

Dans le mode de réalisation illustré sur les figures 1 à 3, les faces de sorties additionnelles sont plus particulièrement sensiblement perpendiculaires à la face de sortie principale et à la face de contact, de sorte que le guide de lumière présente, dans un plan de coupe longitudinal et transversal, une forme sensiblement rectangulaire.

On distingue sur le guide une partie haute propre à l'émission de rayons lumineux et une partie basse porteuse des moyens de fixation du guide sur la platine de fixation.

La face de sortie principale 64 est munie de tores prenant la forme de coussinets, et connus par ailleurs sous l'appellation anglaise de " pillow ", tandis que les faces de sortie additionnelles 66 sont munies d'éléments prismatiques.

On fait la différence entre le premier type de revêtement optique fait de coussinets et le second type de revêtement optique fait d'éléments prismatiques, en ce que le premier type de revêtement permet une forte réfraction des rayons lumineux impactant la face du guide correspondante, pour la répartition et l'éclatement du faisceau lumineux en sortie, et en ce que le deuxième type de revêtement permet aussi bien de réfracter la lumière en direction des collecteurs vers lesquels la face du guide correspondante est tournée que de réfléchir en interne les rayons lumineux vers la face de sortie principale. On note toutefois que les prismes sont agencés selon une courbure propre à guider la lumière principalement vers la face de sortie principale, et que c'est une part restreinte des rayons lumineux qui traversent les faces de sortie additionnelles pour éclairer les collecteurs.

On peut également prévoir de tels éléments prismatiques sur la face de contact pour réfléchir et diffracter les rayons cheminant dans le guide. La présence de la face de support de la platine de fixation en regard de la face de contact du guide de lumière permet d'éviter la diffusion de rayons lumineux sortant du guide au niveau de la face de contact. A cet effet, tel que cela est illustré sur la figure 3, la face de contact présente avantageusement un cadre 70 qui suit la courbure de la face de support de la platine sur laquelle le guide repose, et qui entoure une partie centrale 72 munie des prismes dont la courbure vue de l'arrière du guide est distincte de celle du cadre.

Une encoche 74 est réalisée au sommet de la face avant, sur une bande 76 dépourvue de " coussinets " et essentiellement destinée à assurer le maintien en position du guide, ladite encoche étant apte à coopérer avec l'ergot réalisé sur la face interne du bord tombé lorsque le guide de lumière est inséré dans la platine de fixation.

Dans la partie basse du guide porteuse de moyens de fixation du guide sur la platine, on prévoit une languette 77 sur la face de contact du guide, de hauteur égale à l'entraxe entre les rails de guidage prévus sur la platine de fixation. On prévoit en outre une mortaise 78 sur la face avant du guide apte à coopérer, lorsque le guide est en place dans la platine, avec le tenon venu de matière avec la deuxième aile et évoqué précédemment.

On va décrire ci-après comment la forme du guide permet la réalisation de la fonction de l'invention selon laquelle on combine un éclairage direct selon une première direction, et un éclairage diffus selon au moins une deuxième direction pour augmenter la surface minimale d'éclairage.

Les rayons lumineux émis dans ces deux types d'éclairage sont issus de la source lumineuse secondaire, qui est avantageusement distincte des sources lumineuses primaires, de sorte qu'elle assure seule la fonction de feux diurnes.

La source lumineuse secondaire est fixée sur le moyen support en regard de la face d'entrée du guide de lumière. Ici la source lumineuse secondaire est rapportée sous le moyen support, la source étant alors apte à émettre vers le haut.

Dans l'exemple décrit, la source lumineuse est une diode électroluminescente portée par une plaque de circuits imprimés 82 et apte à émettre des rayons lumineux en fonction d'une instruction de commande électrique. On comprendra que d'autres types de sources lumineuses pourraient être utilisés sans sortir du contexte de l'invention.

Tel que cela est visible sur la figure 2, deux trous d'indexage sont réalisés dans la plaque de circuits imprimés, de diamètre sensiblement égal au diamètre des plots d'indexage 55 portés par la platine de fixation, sur la face externe de la paroi de fond de la cuvette. On s'assure ainsi, par la coopération de ces moyens d'indexage portés par la plaque porteuse de la diode et par la platine porteuse du guide de lumière, que la position du guide par rapport à la source lumineuse est correcte pour que les rayons lumineux entrent de façon conforme par la face d'entrée du guide de lumière.

On va maintenant décrire plus en détails le montage et le fonctionnement de l'invention, afin de comprendre notamment le double type d'éclairage réalisé par les feux diurnes selon l'invention, à savoir un éclairage direct par la face de sortie principale du guide et un éclairage indirect par les faces de sortie additionnelles via réflexion sur les collecteurs, et afin de comprendre par exemple la double fonction de chaque collecteur, à savoir d'une part la déviation optique précise qu'ils réalisent des rayons lumineux issus des sources lumineuses primaires pour qu'ils sortent du module parallèlement à l'axe optique et d'autre part la déviation optique moins contrôlée qu'ils réalisent des rayons lumineux issus des sources lumineuses secondaires, l'important étant ici qu'ils soient réfléchis sans que leur direction après réflexion soit primordiale.

On monte dans un premier temps le guide de lumière sur la platine de fixation, et on insère à cet effet le guide latéralement dans la zone de fixation, de manière à ce que le sommet du guide s'insère entre la face de support et le bord tombé de la zone de fixation et de manière à ce que la partie inférieure du guide s'insère dans la cuvette de réception, entre la première aile et la deuxième aile. Le guidage est facilité par la coopération de la languette dans les rails jusqu'à la rencontre de la butée. Dans cette position, on a en partie inférieure le tenon formé sur la cuvette de réception qui coopère avec la mortaise formée dans la partie basse du guide de lumière et en partie supérieure l'encoche formée sur la face avant du guide qui coopère avec l'ergot porté par le bord tombé, et on assure ainsi le maintien en position du guide.

Le guide de lumière est alors bloqué dans les trois positions de l'espace par la platine de fixation. Pour le démontage, on peut retirer le guide de la platine par glissement par le même côté, en forçant au désengagement du tenon et de la mortaise.

Le guide est figé en position de façon indémontable lorsque la platine de fixation est rapportée sur le moyen support du collecteur.

A cet effet, on plaque la zone d'ancrage contre la zone intermédiaire disposée entre les deux collecteurs, en amenant verticalement la platine de fixation pour que la partie inférieure de la zone d'ancrage pénètre dans le logement, puis en la poussant longitudinalement contre la zone intermédiaire de manière à enficher l'élément mâle de fixation de la zone d'ancrage dans la prise aménagée dans le logement. On joue alors sur l'élasticité de l'œillet formé en bout supérieur de la zone d'ancrage pour le passer autour du pion disposé sur le moyen support.

Dans cette position, on observe que le guide de lumière est définitivement bloqué transversalement par les collecteurs.

On monte ensuite la plaque de circuits imprimés, sur laquelle on a disposé la source lumineuse secondaire. La position de cette plaque est indexée par la coopération des trous qu'elle porte avec les pions d'indexage portés par la platine de fixation et dépassant en saillie sous les moyens collecteurs, et l'on fige par vissage la plaque sur le moyen support dans cette position indexée.

De la sorte, la source lumineuse secondaire est placée correctement par rapport à la face d'entré du guide de lumière. La lumière émise pénètre le guide et se dirige principalement verticalement, en direction de la base supérieure du guide contre laquelle l'ensemble des rayons sont renvoyés dans le guide par réflexion totale interne. Dans un sens ou dans l'autre, les rayons dirigés vers la face avant sortent par réfraction, facilitée par les formes optiques en coussinets, pour réaliser la fonction de feux diurnes dans l'axe optique. Les rayons dirigés quant à eux vers la face arrière sont avantageusement réfléchis vers la face de sortie principale, de sorte que l'on augmente la qualité photométrique des feux diurnes, et certains de ces rayons peuvent être dirigés vers les faces latérales, qui forment les faces de sortie additionnelles de sorte que de la lumière peut être réfractée vers les collecteurs en regard desquels elles s'étendent respectivement. On augmente ainsi la surface d'éclairage puisque la lumière ne sort pas que par la face de sortie principale, l'impression étant donné que c'est l'ensemble de la surface couverte par les collecteurs qui participent à la fonction de feux diurnes.

La description qui précède explique clairement comment l'invention permet d'atteindre les objectifs qu'elle s'est fixés et notamment de proposer un module lumineux qui permet un éclatement des zones de sortie des rayons lumineux en sortie du guide, pour traiter distinctement les deux problèmes de la photométrie et de la surface minimale d'éclairage.

Le guide de lumière est conformé pour qu'une petite quantité de lumière s'échappe des côtés et illumine les collecteurs disposés à côté, qui ont alors une deuxième fonction, en plus de leur fonction primaire de dévier la lumière émise par des sources lumineuses primaires pour une fonction de feux de route et de croisement.

Selon l'invention, on traite distinctement la photométrie d'une part, assurée par les rayons lumineux sortant par la face de sortie principale, sur laquelle la lumière est focalisée à l'origine et par laquelle les rayons lumineux sortent principalement parallèlement à l'axe optique, et l'étendue de la surface d'éclairage d'autre part, obtenue par les rayons issus de la face de sortie principale et par la réflexion des rayons dans le collecteur. De la sorte, la surface minimale d'éclairage est respectée, alors qu'elle ne le serait pas par l'illumination de la face de sortie principale seule, choisie plus petite pour des questions de design notamment.

On pourrait prévoir de disposer la diode dans l'axe optique, longitudinalement derrière la face de support, dont une partie formerait alors la face d'entrée. La diode pourrait alors être logée dans la partie évidée de la zone d'ancrage.

De plus, l'agencement du module lumineux selon l'invention est également avantageux lorsque les feux de route et de croisement fonctionnent et que les feux diurnes sont de fait éteints. L'étroitesse des guides de lumière associés aux feux diurnes ne gênent pas l'éclairage par les collecteurs dans leur fonction principale. On facilite la compacité sans pénaliser les performances des différentes fonctions d'éclairage.

On réalise ainsi avantageusement une fonction d'éclairage dans laquelle on respecte les normes réglementaires imposées et les souhaits de design des acteurs du marché automobile.

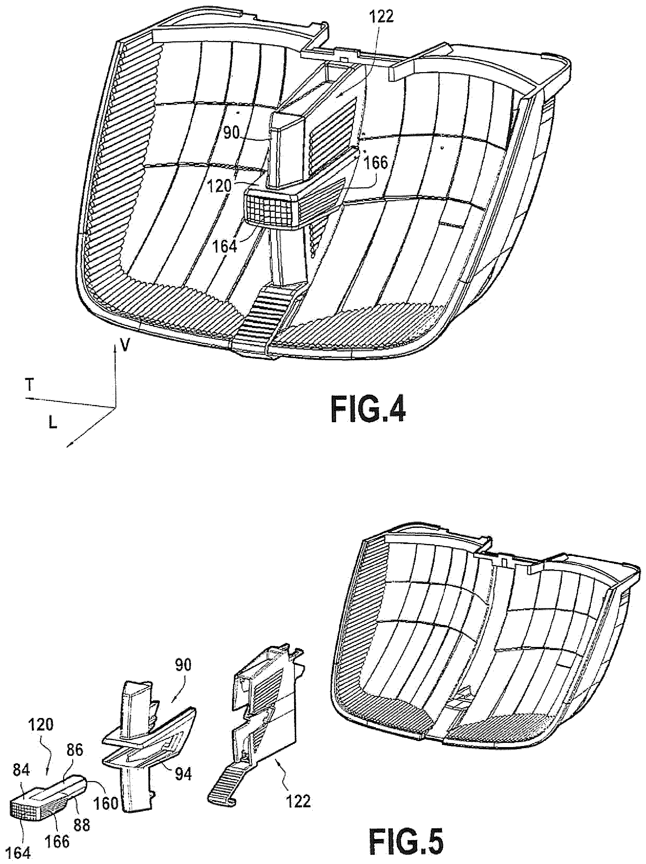

Ces avantages sont également obtenus par un deuxième mode de réalisation de l'invention, illustré sur les figures 4 et 5, dans lequel le guide de lumière diffère en ce qu'il ne s'étend pas sur toute la hauteur des collecteurs. On comprendra que l'on va employer dans la description qui va suivre de ce deuxième mode de réalisation les mêmes références numériques pour les éléments semblables, en ajoutant 100 à la référence donnée pour l'élément correspondant dans le premier mode de réalisation.

Le guide de lumière 120 n'est plus d'un seul tenant avec un tube sensiblement droit qui s'étend verticalement, mais il comporte deux parties parmi lesquelles une tête 84 sensiblement parallélépipède et un corps 86 formé par un tube qui s'étend longitudinalement.

Le tube présente une extrémité libre 88 formant une face d'entrée 160 de la lumière et qui débouche dans la tête, qui présente, de façon semblable au mode de réalisation précédent, trois faces de sortie. La face de sortie principale 164 est agencée dans le prolongement axial du tube, et comme précédemment les faces de sortie additionnelles 166 (là encore, une seule face de sortie additionnelle est visible sur les figures 4 et 5) sont chacune adjacentes à la face de sortie principale 164, en s'étendent respectivement dans un plan non parallèle au plan dans lequel s'étend la face de sortie principale. Tel qu'illustré sur les figures à titre d'exemple, ces faces de sortie additionnelles 166 peuvent être disposées sensiblement perpendiculairement à la face de sortie principale. Les faces de sortie sont munies de coussinets et d'éléments prismatiques de façon similaire à celle du premier mode de réalisation.

La forme particulière du guide de lumière implique une disposition différente de la source lumineuse secondaire et la présence d'un carénage intermédiaire 90 entre la platine de fixation 122 et le guide de lumière 120.

La source lumineuse secondaire, qui est non visible sur les figures 4 et 5, est portée par la platine de fixation, de manière à se trouver en regard de la face d'entrée du guide de lumière. De la sorte, la forme de la platine de fixation est elle aussi modifiée en ce qu'elle ne présente une forme de coffre ouvert vers l'avant pour recevoir le guide de lumière et capoté au niveau de cette ouverture par le carénage intermédiaire. La source lumineuse est donc fixée sur la paroi de fond, à l'opposé de l'ouverture de la platine.

Comme précédemment, la platine de fixation comporte une zone d'ancrage porteuse de moyens d'encliquetage apte à solidariser la platine au moyen support entre les collecteurs, et une zone de fixation apte cette fois à coopérer avec le carénage intermédiaire et non directement avec le guide de lumière.

Le carénage intermédiaire 90 comporte une barrette verticale 92 apte à être encliquetée sur la platine de fixation pour recouvrir l'ouverture, la barrette étant coupée à mi-hauteur par une portion d'accueil 94 de forme correspondante à la forme de la tête du guide de lumière.

Le fonctionnement de l'ensemble est similaire à celui décrit précédemment, la lumière étant apte à sortir du guide de lumière principalement par la face de sortie disposée transversalement à l'axe optique, et de façon plus aléatoire par les faces de sortie additionnelles latérales pour un éclairage des collecteurs. On observe qu'ici la source lumineuse secondaire est disposée de manière à ce que les rayons lumineux qu'elle émet sont directement ciblés vers la face de sortie principale.

Bien entendu, diverses modifications peuvent être apportées par l'homme du métier aux exemples de réalisation du module lumineux selon l'invention, qui viennent d'être décrits de façon non limitative.

A titre d'exemple, l'orientation et le type des moyens d'ancrage de la platine de fixation dans le moyen support pourront différer sans que l'on sorte du contexte de l'invention.

De même, on a décrit des modes de réalisation de l'invention dans lesquels le module comporte deux collecteurs. On comprendra que la description pourra se lire sans difficulté particulière en l'appliquant à un module dans lequel on dispose de plus de deux collecteurs, au moins un système optique additionnel étant prévu entre deux collecteurs voisins.

## Revendications

1. Module lumineux (2), pour l'éclairage et/ou la signalisation d'un véhicule automobile, comportant un axe optique et un moyen support (4) d'au moins un collecteur (6) de rayons lumineux, émis par une source lumineuse primaire, au voisinage duquel est disposé un guide de lumière (20) apte à guider les rayons émis par une source lumineuse secondaire (10) depuis une face d'entrée vers au moins deux faces de sortie distinctes parmi lesquelles une face de sortie principale (64), à travers laquelle les rayons passent selon une première direction, et au moins une face de sortie additionnelle (66) qui est orientée de sorte que les rayons lumineux sortant du guide à travers cette face de sortie additionnelle sont dirigés vers le collecteur, selon une deuxième direction distincte de la première direction, ladite au moins une face de sortie additionnelle (66) étant adjacente à ladite face de sortie principale,
**caractérisé en ce que** le moyen support (4) porte deux collecteurs (6) aptes à dévier sensiblement parallèlement à l'axe optique la lumière émise par une source lumineuse primaire respectivement associée à chacun des collecteurs, ainsi qu'un système optique additionnel (8) disposé entre les collecteurs et qui comporte la source lumineuse secondaire (10) apte à émettre des rayons dans le guide de lumière (20 ; 120), le guide de lumière comportant trois faces de sortie, parmi lesquelles une face de sortie principale (64 ; 164) sensiblement perpendiculaire à l'axe optique et deux faces de sortie secondaires (66 ; 166) opposées et respectivement orientées vers chacun des collecteurs.

2. Module lumineux selon la revendication 1, **caractérisé en ce que** ladite au moins une face de sortie additionnelle est sensiblement perpendiculaire à ladite face de sortie principale.

3. Module lumineux selon la revendication 1 ou 2, **caractérisé en ce que** le guide de lumière (20) est réalisé dans un matériau apte à être traversé par la lumière, tel qu'un matériau transparent, notamment du polyméthacrylate de méthyle ou du polycarbonate.

4. Module lumineux l'une des revendications précédentes, **caractérisé en ce que** la face de sortie principale (64) et/ou les faces de sortie additionnelles (66) comprennent des tores prenant la forme de coussinets, des éléments prismatiques, de stries, ou du grainage.

5. Module lumineux selon la revendication 4, **caractérisé en ce que** la face de sortie principale (64) est munie de tores prenant la forme de coussinets.

6. Module lumineux selon la revendication 4 ou 5, **caractérisé en ce que** les faces de sortie additionnelles (66) sont munies d'éléments prismatiques.

7. Module lumineux selon l'une des revendications précédentes, **caractérisé en ce que** le guide de lumière (20) et la source lumineuse secondaire (10) sont respectivement fixés sur le moyen support (4) de sorte que la source lumineuse secondaire est disposée en regard de la face d'entrée dudit guide de lumière.

8. Module lumineux selon l'une des revendications précédentes, **caractérisé en ce que** le guide de lumière (20) est fixé sur le moyen support (4) par l'intermédiaire d'une platine de fixation (22).

9. Module lumineux selon la revendication 8, **caractérisé en ce que** ladite platine de fixation (22) comporte une zone d'ancrage (24) porteuse des moyens de fixation de la platine sur le moyen support (4), ainsi qu'une zone de fixation (26) du guide de lumière.

10. Module lumineux selon la revendication 8 ou 9, **caractérisé en ce qu'**il comporte un élément formant carénage intermédiaire (90) disposé entre la platine (122) et le guide de lumière (120).

11. Module lumineux selon l'une des revendications 1 à 10, **caractérisé en ce que** le guide de lumière (20) s'étend sensiblement sur toute la hauteur du collecteur et prend une forme tubulaire, la source lumineuse secondaire (10) étant disposée sous le collecteur (6) en regard de la face d'entrée du guide de lumière formée à une extrémité axiale dudit guide et **caractérisé en ce que** le système optique additionnel (8) comporte en outre une platine de fixation (22) par l'intermédiaire de laquelle le guide de lumière est fixé sur le moyen support (4).

12. Module lumineux selon la revendication 11, **caractérisé en ce que** la platine de fixation (22) comporte une zone d'ancrage (24) porteuse des moyens de fixation de la platine sur le moyen support, ainsi qu'une zone de fixation (26) du guide de lumière.

13. Module lumineux selon la revendication 12, **caractérisé en ce que** la zone de fixation (26) est agencée pour permettre l'insertion du guide de lumière (20) latéralement dans la platine de fixation (22), et **en ce qu'**elle présente des moyens d'encliquetage coopérants avec des moyens d'encliquetage complémentaires portés par le guide de lumière pour le maintien en position de ce dernier dans la platine de fixation.

14. Module lumineux selon l'une des revendications 1 à 10, **caractérisé en ce que** le guide de lumière (120) s'étend sensiblement à mi-hauteur du collecteur et comporte une tête (84) porteuse des faces de sortie (164, 166) et un corps tubulaire (86) prolongeant ladite tête sensiblement selon l'axe optique, la source lumineuse étant disposée en regard de la face d'entrée (160) disposée à l'extrémité du corps opposée à ladite tête et **caractérisé en ce que** le système optique additionnel comporte en outre une platine de fixation (122) et un carénage intermédiaire (90) par l'intermédiaire de laquelle le guide de lumière est fixé sur le moyen support, le carénage intermédiaire étant adapté à porter le guide de lumière et à être fixé sur ladite platine, elle-même fixée sur le moyen support.

## Patentansprüche

1. Leuchtmodul (2) zur Beleuchtung und/oder Signalisierung eines Kraftfahrzeugs, beinhaltend eine optische Achse und ein Halterungsmittel (4) zum Haltern mindestens eines Kollektors (6) für Lichtstrahlen, die von einer Primärlichtquelle ausgesandt werden, in dessen Nähe ein Lichtleiter (20) angeordnet ist, der geeignet ist, die von einer Sekundärlichtquelle (10) ausgesandten Strahlen von einer Eintrittsfläche zu mindestens zwei verschiedenen Austrittsflächen zu leiten, darunter eine Hauptaustrittsfläche (64), durch die hindurch die Strahlen entlang einer ersten Richtung verlaufen, und mindestens eine zusätzliche Austrittsfläche (66), die so ausgerichtet ist, dass die aus dem Leiter durch diese zusätzliche Austrittsfläche hindurch austretenden Lichtstrahlen zum Kollektor hin gerichtet werden, entlang einer zweiten Richtung, die von der ersten Richtung verschieden ist, wobei die mindestens eine zusätzliche Austrittsfläche (66) an die Hauptaustrittsfläche angrenzt,
**dadurch gekennzeichnet, dass** das Halterungsmittel (4) zwei Kollektoren (6) trägt, die geeignet sind, das von einer jeweils jedem der Kollektoren zugeordneten Primärlichtquelle ausgesandte Licht im Wesentlichen parallel zur optischen Achse abzulenken, sowie ein zusätzliches optisches System (8), das zwischen den Kollektoren angeordnet ist und das die Sekundärlichtquelle (10) beinhaltet, die geeignet ist, Strahlen in den Lichtleiter (20; 120) auszusenden, wobei der Lichtleiter drei Austrittsflächen umfasst, darunter eine Hauptaustrittsfläche (64; 164), die im Wesentlichen senkrecht zur optischen Achse verläuft, und zwei entgegengesetzte und jeweils zu jedem der Kollektoren hin ausgerichtete Sekundäraustrittsflächen (66; 166).

2. Leuchtmodul nach Anspruch 1, **dadurch gekennzeichnet, dass** die mindestens eine zusätzliche Austrittsfläche im Wesentlichen senkrecht zu der Hauptaustrittsfläche verläuft.

3. Leuchtmodul nach Anspruch 1 oder 2, **dadurch gekennzeichnet, dass** der Lichtleiter (20) aus einem Material ausgeführt ist, das geeignet ist, vom Licht durchquert zu werden, wie einem transparenten Material, insbesondere Polymethylmethacrylat oder Polycarbonat.

4. Leuchtmodul nach einem der vorhergehenden Ansprüche, **dadurch gekennzeichnet, dass** die Hauptaustrittsfläche (64) und/oder die zusätzlichen Austrittsflächen (66) Toroide, welche die Form von Kissen annehmen, prismatische Elemente, Riefen oder eine Aufrauhung umfassen.

5. Leuchtmodul nach Anspruch 4, **dadurch gekennzeichnet, dass** die Hauptaustrittsfläche (64) mit Toroiden versehen ist, die die Form von Kissen annehmen.

6. Leuchtmodul nach Anspruch 4 oder 5, **dadurch gekennzeichnet, dass** die zusätzlichen Austrittsflächen (66) mit prismatischen Elementen versehen sind.

7. Leuchtmodul nach einem der vorhergehenden Ansprüche, **dadurch gekennzeichnet, dass** der Lichtleiter (20) und die Sekundärlichtquelle (10) jeweils an dem Halterungsmittel (4) so befestigt sind, dass die Sekundärlichtquelle gegenüber der Eintrittsfläche des Lichtleiters angeordnet ist.

8. Leuchtmodul nach einem der vorhergehenden Ansprüche, **dadurch gekennzeichnet, dass** der Lichtleiter (20) am Halterungsmittel (4) über eine Befestigungsplatte (22) befestigt ist.

9. Leuchtmodul nach Anspruch 8, **dadurch gekennzeichnet, dass** die Befestigungsplatte (22) einen Verankerungsbereich (24), der Befestigungsmittel zum Befestigen der Platte am Halterungsmittel (4) trägt, sowie einen Befestigungsbereich zum Befestigen (26) des Lichtleiters beinhaltet.

10. Leuchtmodul nach Anspruch 8 oder 9, **dadurch gekennzeichnet, dass** es ein eine Zwischenverkleidung (90) bildendes Element beinhaltet, das zwischen der Platte (122) und dem Lichtleiter (120) angeordnet ist.

11. Leuchtmodul nach einem der Ansprüche 1 bis 10, **dadurch gekennzeichnet, dass** sich der Lichtleiter (20) im Wesentlichen über die gesamte Höhe des Kollektors erstreckt und eine Röhrenform annimmt, wobei die Sekundärlichtquelle (10) unter dem Kollektor (6) gegenüber der an einem axialen Ende des Leiters gebildeten Eintrittsfläche des Lichtleiters angeordnet ist, und **dadurch gekennzeichnet, dass** das zusätzliche optische System (8) ferner eine Befestigungsplatte (22) beinhaltet, über die der Lichtleiter am Halterungsmittel (4) befestigt ist.

12. Leuchtmodul nach Anspruch 11, **dadurch gekennzeichnet, dass** die Befestigungsplatte (22) einen Verankerungsbereich (24), der Befestigungsmittel zum Befestigen der Platte am Halterungsmittel trägt, sowie einen Befestigungsbereich zum Befestigen (26) des Lichtleiters beinhaltet.

13. Leuchtmodul nach Anspruch 12, **dadurch gekennzeichnet, dass** der Befestigungsbereich (26) so gestaltet ist, dass er das Einsetzen des Lichtleiters (20) seitlich in die Befestigungsplatte (22) ermöglicht, und dass er Rastmittel aufweist, die mit komplementär ausgebildeten Rastmitteln zusammenwirken, die vom Lichtleiter getragen werden, um Letzteren in der Befestigungsplatte in der Position zu halten.

14. Leuchtmodul nach einem der Ansprüche 1 bis 10, **dadurch gekennzeichnet, dass** sich der Lichtleiter (120) im Wesentlichen auf halber Höhe des Kollektors erstreckt und einen Kopf (84) beinhaltet, der Austrittsflächen (164, 166) trägt, und einen röhrenförmigen Körper (86), der den Kopf im Wesentlichen entlang der optischen Achse verlängert, wobei die Lichtquelle gegenüber der Eintrittsfläche (160) angeordnet ist, die an dem zum Kopf entgegengesetzten Ende des Körpers angeordnet ist, und **dadurch gekennzeichnet, dass** das zusätzliche optische System ferner eine Befestigungsplatte (122), über die der Lichtleiter am Halterungsmittel befestigt ist, und eine Zwischenverkleidung (90) beinhaltet, wobei die Zwischenverkleidung geeignet ist, den Lichtleiter zu tragen und an der Platte befestigt zu werden, die wiederum am Halterungsmittel befestigt ist.

## Claims

1. Light module (2), for motor vehicle lighting and/or signaling, comprising an optical axis and a means (4) for supporting at least one collector (6) of light rays, emitted by a primary light source, in the vicinity of which there is a light guide (20) suitable for guiding the rays emitted by a secondary light source (10) from an input face to at least two distinct output faces including a main output face (64), through which the rays pass in a first direction, and at least one additional output face (66) which is oriented such that the light rays leaving the guide through this additional output face are directed toward the collector, in a second direction distinct from the first direction, said at least one additional output face (66) being adjacent to said main output face,
**characterized in that** the support means bears two collectors (6) suitable for deflecting, substantially parallel to the optical axis, the light emitted by a primary light source respectively associated with each of the collectors, and an additional optical system (8) positioned between the collectors and which comprises the secondary light source (10) suitable for emitting rays into the light guide (20; 120), the light guide comprising three output faces, including a main output face (64; 164) substantially at right angles to the optical axis and two opposing secondary output faces (66; 166) and respectively oriented toward each of the collectors.

2. Light module according to Claim 1, **characterized in that** said at least one additional output face is substantially at right angles to said main output face.

3. Light module according to Claim 1 or 2, **characterized in that** the light guide (20) is produced in a material suitable for being passed through by light, such as a transparent material, notably polymethlymethacrylate or polycarbonate.

4. Light module according to one of the preceding claims, **characterized in that** the main output face (64) and/or the additional output faces (66) comprise toruses taking the form of pillows, prismatic elements, ridges or graining.

5. Light module according to Claim 4, **characterized in that** the main output face (64) is provided with toruses taking the form of pillows.

6. Light module according to Claim 4 or 5, **characterized in that** the additional output faces (66) are provided with prismatic elements.

7. Light module according to one of the preceding claims, **characterized in that** the light guide (20) and the secondary light source (10) are respectively fixed onto the support means (4) such that the secondary light source is positioned facing the input face of said light guide.

8. Light module according to one of the preceding claims, **characterized in that** the light guide (20) is fixed onto the support means (4) via a fixing deck (22).

9. Light module according to Claim 8, **characterized in that** said fixing deck (22) comprises an anchoring area (24) bearing means for fixing the deck onto the support means (4), and a fixing area (26) for the light guide.

10. Light module according to Claim 8 or 9, **characterized in that** it comprises an intermediate fairing-forming element (90) positioned between the deck (122) and the light guide (120).

11. Light module according to one of the claims 1 to 10, **characterized in that** the light guide (20) extends substantially over the entire height of the collector and has a tubular form, the secondary light source (10) being positioned under the collector (6) facing the input face of the light guide formed at an axial end of said guide and **characterized in that** the additional optical system (8) further comprises a fixing deck (22) via which the light guide is fixed onto the support means (4).

12. Light module according to Claim 11, **characterized in that** the fixing deck (22) comprises an anchoring area (24) bearing means for fixing the deck onto the support means, and a fixing area (26) for the light guide.

13. Light module according to Claim 12, **characterized in that** the fixing area (26) is arranged to allow the insertion of the light guide (20) laterally into the fixing deck (22), and **in that** it has snap-fitting means co-operating with complementary snap-fitting means borne by the light guide to keep the latter in position in the fixing deck.

14. Light module according to one of the claims 1 to 10, **characterized in that** the light guide (120) extends substantially to mid-height of the collector and comprises a head (84) bearing output faces (164, 166) and a tubular body (86) extending said head substantially along the optical axis, the light source being positioned facing the input face (160) positioned at the end of the body opposite to said head and **characterized in that** the additional optical system further comprises a fixing deck (122) and an intermediate fairing (90) via which the light guide is fixed onto the support means, the intermediate fairing being adapted to bear the light guide and to be fixed onto said deck, said deck being fixed onto the support means.
